# EUROPEAN PATENT SPECIFICATION

(11) **EP 4 173 912 B1**
(45) Date of publication and mention of the grant of the patent: **13.12.2023**
(21) Application number: 21205327.6
(22) Date of filing: 28.10.2021
(51) Int. Cl.: B60T 17/22, B60T 7/12, B60T 8/00, F16D 65/00

(54) **METHOD FOR DETERMINING A STARTING CONDITION FOR CLEANING A BRAKE DISK, METHOD FOR CLEANING A BRAKE DISK AND DATA PROCESSING DEVICE**
VERFAHREN ZUR BESTIMMUNG EINES AUSGANGSZUSTANDES ZUR REINIGUNG EINER BREMSSCHEIBE, VERFAHREN ZUR REINIGUNG EINER BREMSSCHEIBE UND DATENVERARBEITUNGSVORRICHTUNG
PROCÉDÉ POUR DÉTERMINER UNE CONDITION DE DÉMARRAGE DE NETTOYAGE D'UN DISQUE DE FREIN, PROCÉDÉ DE NETTOYAGE D'UN DISQUE DE FREIN ET DISPOSITIF DE TRAITEMENT DE DONNÉES

(43) Date of publication of application: 03.05.2023
(73) Proprietor: Volvo Car Corporation, 40531 Göteborg (SE)
(72) Inventor: LEE, Chih Feng, 40531 Göteborg (SE); BOHMAN, Mats, 40531 Göteborg (SE)
(74) Representative: Maiwald GmbH

(56) References cited:
- EP-A1- 3 712 002
- WO-A1-02/083473
- WO-A1-2005/021345
- DE-A1-102010 000 823
- DE-A1-102016 007 436
- DE-A1-102020 214 711
- US-A1- 2020 156 614

## Description

The present invention relates to a method for determining a starting condition for cleaning a brake disk.

The invention is additionally directed to a method for cleaning a brake disk.

Furthermore, the invention is about a data processing device comprising means for carrying out at least one of the methods mentioned above.

In electric vehicles, a deceleration can be effected in two ways. In a first alternative, a foundation brake is used. This means that brake pads are pressed against corresponding brake disks being connected to the vehicle's wheels. The friction between the brake pads and the brake disks leads to a deceleration of the vehicle. A foundation brake can also be called a mechanical brake or a friction brake. In a second alternative, an electric traction machine is operated as a generator being driven by the vehicle's wheels and transforming the kinetic energy of the vehicle into electric energy being fed into an electric storage device. Thus, the vehicle is decelerated by recuperating kinetic energy in the form of electric energy. For this reason, this kind of deceleration can also be called recuperative braking or recuperation braking.

In this context, an electric vehicle can be a battery electric vehicle or a hybrid electric vehicle.

Since the recuperated energy is rendered available for a subsequent driving activity, e.g. acceleration, recuperative braking has a positive effect on the electric range and the overall energy efficiency of the electric vehicle. The friction energy generated in a foundation brake usually cannot be recuperated. In simplified words, it is lost. Therefore, known driving strategies of electric vehicles have the objective of using the foundation brake as little as possible. However, this results in the problem of corrosion on the brake disks, e.g. rust spots forming thereon.

Known solutions to this problem suggest using the foundation brake from time to time.

When the foundation brake is used, the abrasive surface of the brake pads is expected to remove the rust spots, i.e. to clean the brake disk. Consequently, this solution has a negative effect on the range and energy efficiency of the electric vehicle since the friction energy used for cleaning the brake disk cannot be recuperated. In this context,
US 2020/156614 A1 discloses a method for cleaning a brake disk which comprises determining that an amount of rust on the brake disk exceeds a predefined threshold. Moreover, an energy quantity being necessary for removing the amount of rust from the brake disk is determined.

An objective of the present invention is therefore to provide a solution to the problem of corrosion on the brake disk which increases the energy efficiency of the electric vehicle while maintaining a high level of effectiveness of cleaning.

The problem is at least partially solved or alleviated by the subject matter of the independent claims of the present invention wherein further examples are incorporated in the dependent claims.

The problem is at least partially solved or alleviated by a method for determining a starting condition for cleaning a brake disk, comprising
a. determining that an amount of rust on the brake disk exceeds a predefined threshold,
b. determining an energy quantity being necessary for removing the amount of rust from the brake disk by pressing at least one corresponding brake pad against the brake disk,
c. estimating a distribution of brake energy over a current drive cycle by using at least one parameter describing historic driving behavior and at least one parameter characterizing the current drive cycle, and
d. deriving a starting speed and a starting brake force request from the distribution of brake energy, the starting speed and the starting brake force being determined such that the energy quantity being necessary for removing the determined amount of rust is fully applied to the brake disk during the current drive cycle.

The general observation underlying the method for determining a starting condition for cleaning a brake disk is that the formation of rust is dependent on environmental conditions and on past drive cycles. However, known brake disk cleaning activities are usually performed according to a fixed schedule. This leads to the fact that brake disk cleaning is rather performed more often than necessary. As a consequence thereof, the energy recuperation potential is not fully used which leads to reduced energy efficiency.

The general idea underlying the present invention is thus to determining a starting condition for cleaning a brake disk in an adaptive manner. This means that at least one parameter describing historic driving behavior is used for determining the starting condition. Said otherwise, the starting condition depends on historic driving behavior. Additionally, at least one parameter characterizing the current drive cycle is used in order to determine the starting condition. It is thus possible to start the brake cleaning at a point during the drive cycle which proves to be well suitable in terms of energy efficiency. Thus, the energy efficiency of the electric vehicle is increased while effective cleaning is ensured.

In the present invention, the term current drive cycle always means the remaining portion of the current drive cycle, i.e. the portion of the drive cycle which lies ahead.

The method according to the invention makes use of the fact that the brake energy of the foundation brake is a function of a normal brake force between the brake pads and the corresponding brake disk, a duration of the braking event and a vehicle speed. The foundation brake essentially transforms the kinetic energy of the vehicle into thermal or frictional energy.

The starting conditions are determined such that brake disk cleaning is to be performed in a situation when braking is requested. This especially enhances the energy efficiency in comparison to a situation in which brake disk cleaning is performed when no actual braking is requested. In the latter situation the deceleration torque generated by the brake has to be compensated by the traction motor or engine.

The amount of rust on the brake disk can be determined by a rust formation model. Consequently, the amount of rust can be determined with high reliability and precision. The rust formation model for example uses at least one of the following input parameters: ambient temperature, humidity, parking time of the vehicle. Preferably, the history of these parameters is taken into account. The output parameter of the rust formation model is an amount of rust. To this end a chemical model can be used estimating the amount of rust being formed. Alternatively, a look-up table can be used for the same purpose. The look-up table can for example be generated in a laboratory or during test drives under predefined conditions.

It is possible that the rust formation model is configured such that a parameter describing the history of brake force delivery of the foundation brake can be used as an additional input parameter. The amount of rust being estimated by the rust formation model is thus reduced appropriately, every time the foundation brake is used. This further enhances the precision of the estimation of rust formation.

The energy quantity being necessary for removing the amount of rust can be determined by a rust removal model. The rust removal model uses a current amount of rust as an input parameter. As has already been explained, the brake energy of the foundation brake is a function of a normal brake force between the brake pads and the corresponding brake disk, a duration of the braking event and a vehicle speed. The brake energy will be used to remove the rust. In order to precisely estimate the energy quantity being necessary for removing the amount of rust, a look-up table can be used. This look-up table can be generated during experiments, wherein different amounts of brake energy are applied and the resulting rust removal is determined by assessing a mass reduction of the brake disk in a laboratory or by assessing a reduction in surface roughness of the brake disk.

The method may respect a speed range which must not comprise the starting speed. In other words, a certain speed range may be excluded when considering brake disk cleaning. This is for example the case for a vehicle speed being below 50km/h. In other examples, a vehicle speed below 45 km/h, below 40 km/h, below 35 km/h or below 30km/h respectively may be excluded. In these exemplary speed regions a noise resulting from brake disk cleaning may be clearly noticeable for a user of the vehicle and thus reduce driving comfort. Also a speed range around 100 km/h may be avoided since in this speed range brake judder very often occurs. This speed range may be defined as a speed between 90 km/h and 110 km/h or between 95 km/h and 105 km/h. In summary, speed ranges which are not suitable from a technical point of view or which have an undesired impact on the passenger comfort can be excluded.

The historic driving behavior may be described by a parameter relating to the occurrence of braking events per distance unit in function of a vehicle speed. A distance unit may be a kilometer. This parameter can be easily recorded during the operation of the vehicle. Once this parameter is known for a set of different speeds, a curve can be drawn through these points, resulting in a corresponding model. Using this parameter and knowing the predicted speed during the current drive cycle, an amount of braking events can be estimated for the current drive cycle. Furthermore, the brake energy distribution over the current drive cycle can be estimated if at least an estimation about the energy used in each of the braking events is used.

The historic driving behavior may be further described by a parameter relating to the duration of historic braking events. Such a parameter is helpful for the assessment of the distribution of brake energy over the current drive cycle. For example, the parameter comprises an average braking duration or a distribution of historic brake durations. Also, a fixed standard value can be used.

The historic driving behavior can be described by a parameter relating to a historic deceleration action. Thus, the historic driving behavior is for example described by a historic brake pedal positon or by a history of deceleration actions resulting from a cruise control unit. These parameters are useful for estimating the amount and nature of deceleration actions throughout a current drive cycle. Based thereon, a brake energy distribution over the current drive cycle can be precisely estimated. For example, if the historic driving behavior is described by a distribution of historic brake pedal positions, it is noticeable if a driver usually pushes the brake pedal rather hard, i.e. rather aggressively, or not.

The historic driving behavior may also be described by a parameter relating to a distance and/or to a speed relative to a front vehicle. This parameter may for example be generated by a front radar or a front camera of the vehicle. It can be used for predicting a likelihood of a braking event throughout the drive cycle. This is especially the case if traffic data, be it historic data or real-time data, is available for the current drive cycle. Knowing the likelihood of the braking events leads to a better estimation of the distribution of brake energy.

The historic driving behavior may be described by a parameter relating to a historic speed relative to a corresponding speed limit. Consequently, an accuracy of the distribution of brake energy over the current drive cycle can be enhanced. This is especially the case when considering the fact that speed limits over the current drive cycle are available from a navigation unit.

The historic driving behavior may be described by a parameter relating to a historic power demand relative to a road slope. In this context, the road slope distribution over the current drive cycle is for example provided by a navigation unit. Consequently, a distribution of estimated power demand can be derived from the historic power demand. This is helpful for estimating a distribution of brake energy over the current drive cycle.

The current drive cycle may be described by a parameter relating to at least one of a distance covered by the drive cycle, a slope distribution and a speed limit distribution. All or some of these parameters may be provided by a navigation unit. Alternatively, these parameters may be calculated from previous usage patterns, e.g. in assessing an average distance, an average slope and/or an average speed. In the latter case, no navigation unit is necessary. A precise characterization of the current drive cycle helps to find the best point for starting the brake cleaning and thus increases the energy efficiency of the vehicle.

The current drive cycle may also be described by a parameter relating to a real time traffic situation. So-called real time traffic information is for example received by a navigation unit. In function of the parameter relating to the real time traffic situation, a speed parameter characterizing the current drive cycle can be modified. The same is true for a likelihood of braking events. Thus, the estimation of the distribution of brake energy over the current drive cycle is improved.

It is also possible that the at least one parameter describing historic driving behavior and/ or the at least one parameter characterizing the current drive cycle is updated during the drive cycle. The update is for example performed periodically after the lapse of a predefined number of seconds or minutes. This means that also the estimation of the distribution of brake energy can be updated. As a result thereof, an updated starting condition for brake disk cleaning can be provided which takes into account changes in historic driving behavior and changes in respect of the current drive cycle. This measure further increases the energy efficiency of the vehicle.

The problem is further at least partially solved or alleviated by a method for cleaning a brake disk, comprising
a. determining a starting condition for cleaning the brake disk by the method for determining a starting condition for cleaning a brake disk according to the present disclosure, and
b. starting a brake disk cleaning procedure once the starting condition is detected during a drive cycle.

In this context, starting a brake disk cleaning procedure means sending a corresponding starting request or setting a corresponding enabling flag.

Thus, brake disk cleaning is only started once a brake force is requested, i.e. when the vehicle is effectively to be decelerated. In order to achieve a cleaning effect, at least a portion of the brake force request is allocated to the foundation brake.

In an example, the foundation brake is used for providing a deceleration effect which goes beyond a deceleration effect being provided by regenerative braking. Thus, starting from the desired deceleration and the means to achieve it, no extra energy is used for cleaning purposes.

In another example, the foundation brake is used if the electric storage device is fully charged or achieves the fully charged state during a deceleration activity. In such a case no further energy recuperation is possible. Thus, also in this case, no extra energy is used for cleaning purposes.

It is understood that the brake disk cleaning procedure will be terminated once a termination condition is met. The termination condition can be an energy threshold, alternatively the termination condition can be an output of the rust removal model calculating the rust being removed if a certain brake force is applied for a certain time in combination with a certain speed or speed range.

The problem is further at least partially solved or alleviated by a data processing device comprising means for carrying out the method for determining a starting condition for cleaning the brake disk of the present disclosure and/or comprising means for carrying out the method for cleaning a brake disk of the present disclosure. Such a data processing device ensures effective cleaning of the brake disk and improves the energy efficiency of the corresponding vehicle at the same time.

The methods of the present invention may be at least partly computer-implemented, and may be implemented in software or in hardware, or in software and hardware. Further, the methods may be carried out by computer program instructions running on means that provide data processing functions. The data processing device may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved. Accordingly, the method may be combined with structural features and, likewise, the device may be combined with features described above with regard to the method.

These and other aspects of the present invention will become apparent from and elucidated with reference to the examples described hereinafter.

Examples of the invention will be described in the following with reference to the following drawings:
- Fig. 1: shows a data processing device according to the present disclosure comprising means for carrying out the method for determining a starting condition for cleaning a brake disk of the present disclosure and comprising means for carrying out the method for cleaning a brake disk of the present disclosure, wherein also input parameters and output parameters are presented,
- Fig. 2: shows the method for cleaning a brake disk of the present disclosure comprising the method for determining a starting condition for cleaning a brake disk of the present disclosure,
- Fig. 3: shows an example of a parameter describing historic driving behavior, and
- Fig. 4: shows a representation of an estimation of a brake energy distribution.

The figures are merely schematic representations and serve only to illustrate examples of the invention. Identical or equivalent elements are in principle provided with the same reference signs.

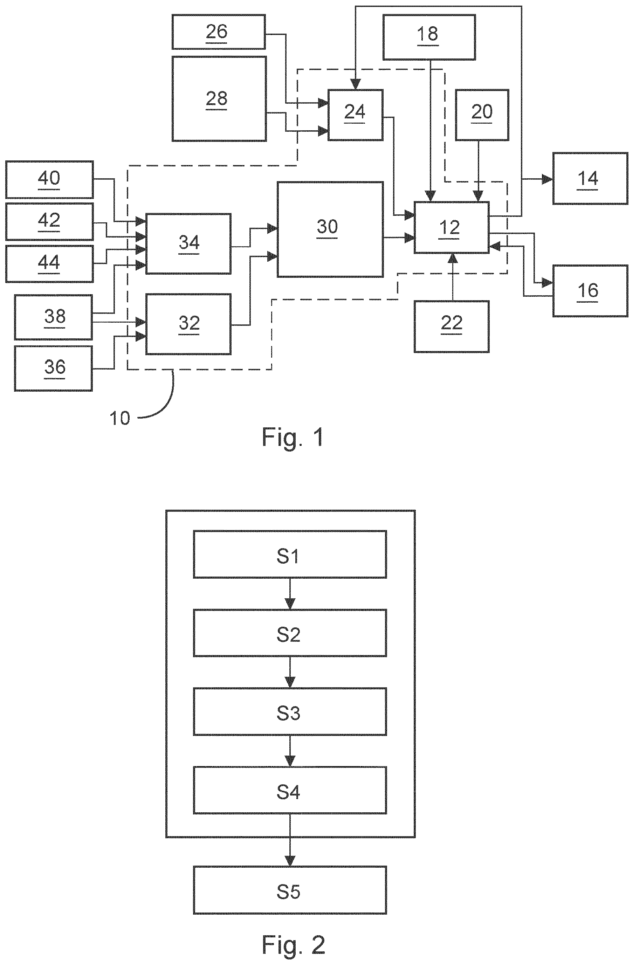

Figure 1 shows a data processing device 10 comprising means for carrying out the method for determining a starting condition for cleaning a brake disk and for carrying out the method for cleaning a brake disk.

The data processing device 10 comprises a brake force allocation unit 12.

The brake force allocation unit 12 is connected to a foundation brake controller 14 and an electric traction motor controller 16.

The brake force allocation unit 12 and its connections are configured such that the brake force allocation unit 12 is able to selectively send a brake force request to the foundation brake controller 14 and/or the electric traction motor controller 16. Additionally, the electric traction motor controller 16 can provide operational conditions of the electric traction motor to the brake force allocation unit 12.

An example of such operational conditions is the achievable lowest limit of negative torque which is a function of speed, and temperature. This parameter restricts the torque being available for regenerative braking.

Furthermore, the brake force allocation unit 12 is configured for receiving a brake force request 18 as an input parameter. The brake force request 18 can be generated by a human driver by pressing a brake pedal or by an autonomous driver or a partly autonomous driver. A partly autonomous driver for example comprises an adaptive cruise control unit being able to generate a brake force request. A fully autonomous driver is for example a driving control unit of a fully autonomous vehicle.

The brake force allocation unit 12 is further configured to receive a vehicle speed 20 and operational conditions 22 being operational conditions of an electric storage device and an engine as input parameters.

In more detail, the operational conditions 22 are received from control units of the electric storage device and the engine respectively.

For example, an operational condition 22 of the electric storage device may describe that its state-of-charge is full. In such a case, regenerative braking is not possible.

An operational condition 22 of the engine for example relates to the achievable lowest limit of negative torque which is a function of speed and temperature. This parameter describes a braking effect being achievable by an engine drag torque.

Thus, the brake force allocation unit 12 is configured for sending a brake force request to at least one of the foundation brake controller 14 and an electric traction motor controller 16 in function of the above input parameters and operational conditions.

Moreover, the data processing device 10 comprises a rust prediction unit 24.

The rust prediction unit 24 is configured such that a rust formation model and a rust removal model can be run thereon.

Furthermore, the rust prediction unit 24 is configured to receive a system time parameter 26 and at least one environmental condition parameter 28. In the present example, the environmental condition parameter 28 comprises a value relating to an ambient temperature and a value relating to humidity.

Additionally, the rust prediction unit 24 is configured for receiving a brake request for the foundation brake controller 14 as an input parameter.

The rust formation model uses the system time parameter 26 and the environmental condition parameter 28 as input parameters to estimate an amount of rust being formed on the brake disk.

The rust removal model predicts an amount of rust which is removed from the brake disk by evaluating the brake request for the foundation brake controller 14.

Since on the rust prediction unit 24 both the rust formation model and the rust removal model are run, the rust prediction unit 24 is able to always provide an estimation of a current amount of rust being present on the brake disk.

The rust prediction unit 24 is connected to the brake force allocation unit 12 unit such that the estimation of the current amount of rust can be communicated from the rust prediction unit 24 to the brake force allocation unit 12.

The data processing device 10 further comprises a brake disk cleaning control unit 30 being configured for providing at least one starting condition for a brake disk cleaning procedure.

In the present example the at least one starting condition for a brake disk cleaning procedure comprises a starting speed and a starting brake force request.

The brake disk cleaning control unit 30 is connected to the brake force allocation unit 12 such that these starting conditions can be communicated.

In the present example, the starting conditions are not fixed, but calculated in function of parameters being provided by a drive cycle prediction unit 32 and a driving behavior history unit 34.

The drive cycle prediction unit 32 receives input parameters characterizing a current drive cycle from a navigation unit 36 and from a front radar unit 38 of the vehicle.

The drive cycle prediction unit 32 is further configured to generate an output parameter characterizing the current drive cycle in dependency of the mentioned input parameters.

In order to communicate the parameter characterizing the current drive cycle to the brake disk cleaning control unit 30, the brake disk cleaning control unit 30 and the drive cycle prediction unit 32 are connected.

The driving behavior history unit 34 uses a record of historic vehicle speed 40 and a record of historic brake force requests 42 as input parameters.

Additionally, historic road information 44 and historic results from front radar 38 are used.

Using the above input parameters, the driving behavior history unit 34 provides at least one parameter describing historic driving behavior to the brake disk cleaning control unit 30. To this end, the brake disk cleaning control unit 30 and the driving behavior history unit 34 are connected.

The data processing device 10 thus is configured for carrying out the method for determining a starting condition for cleaning a brake disk (cf. Figure 2).

This method comprises a first step S1 which consists in determining that an amount of rust on the brake disk exceeds a predefined threshold. This is done by running the rust formation model on the rust prediction unit 24. The predefined threshold is also stored on the rust prediction unit 24.

In a second step S2, an energy quantity being necessary for removing the amount of rust from the brake disk by pressing at least one corresponding brake pad against the brake disk is determined. This is done by running the rust formation model on the rust prediction unit 24.

A third step S3 consists in estimating a distribution of brake energy over a current drive cycle by using at least one parameter describing historic driving behavior being provided by the driving behavior history unit 34 and at least one parameter characterizing the current drive cycle being provided by the drive cycle prediction unit 32.

In the present example, the current drive cycle, i.e. the remaining portion of the current drive cycle is described by a parameter relating to a distance covered by the drive cycle, a slope distribution of the drive cycle and a speed limit distribution over the drive cycle. These parameters are provided by the navigation unit 36.

Furthermore, the current drive cycle is described by a parameter relating to a real time traffic situation. This kind of information influences the route selected by the navigation unit 36, i.e. on the distance covered by the drive cycle and the slope distribution of the drive cycle. Moreover, the speed limit distribution can be adapted due to the real time traffic situation.

Thus, a characterization of the current drive cycle is available for the brake disk cleaning control unit 30.

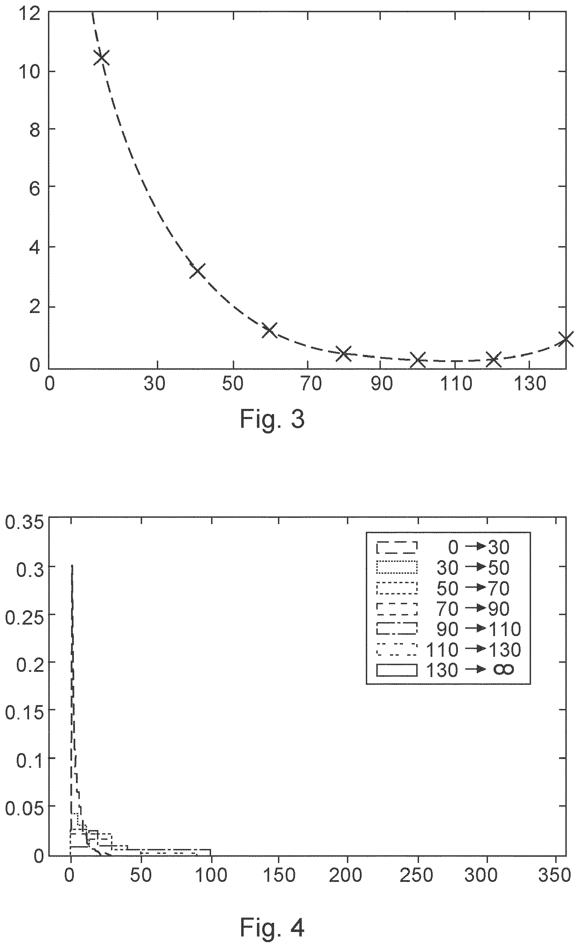

An aspect of the historic driving behavior is described by a parameter relating to the occurrence of braking events per distance unit in function of a vehicle speed. This information forms part of the record of historic brake force requests 42. An exemplary representation is given in Figure 3, wherein the vehicle speed is noted on the horizontal axis and the quantity of braking events per distance unit, here per kilometer, is noted on the vertical axis. A curve has been fitted through the points of measurement being indicated by crosses.

The historic driving behavior is also described by a parameter relating to the duration of historic braking events, e.g. an average duration. This information is also provided by the record of historic brake force requests 42.

Moreover, the historic driving behavior is described by a parameter relating to a historic deceleration action. In the present example, this parameter relates to an average historic brake pedal positon. This information is also provided by the record of historic brake force requests 42.

The historic driving behavior is additionally described by a parameter relating to a historic speed relative to a corresponding speed limit. This parameter can be imagined as an average offset from the speed limit, e.g. a few km/h below the speed limit. This information is provided by the records of historic vehicle speed 40.

Furthermore, the historic driving behavior is described by a parameter relating to a historic power demand relative to a road slope. The historic power demand is defined to be positive for power being provided by the engine or the electric traction machine of the vehicle. Power being provided to the vehicle, e.g. because it drives down a very steep road is defined to be negative. This information is part of the historic road information 44.

The historic driving behavior is further described by a parameter relating to a distance and/or to a speed relative to a front vehicle. Exemplary parameters can relate to an average historic distance or an average historic speed. This kind of information is provided by the front radar 38.

Taking into account, all the parameters characterizing the current drive cycle and relating to historic driving behavior, a distribution of brake energy over the current drive cycle can be estimated.

In more detail, the distance covered by the drive cycle, the corresponding slope distribution and the corresponding speed limits are known from the navigation unit 36.

Now the parameter relating to the historic speed relative to the speed limit is used in order to estimate a speed distribution over the current drive cycle.

Additionally, the parameter relating to the historic power demand relative to the road slope is applied to the slope distribution provided by the navigation unit 36, thus an estimated distribution of power demand over the current drive cycle is known. Based thereon, changes in power demand can be assessed and it is possible to evaluate which changes relate to a deceleration of the vehicle, i.e. are related to a braking activity. It is noted that due to the speed distribution mentioned above, it is known at which speed the braking event will take place.

A likelihood of a braking event can be further described by the average historic distance or an average historic speed relative to a front vehicle.

Furthermore, due to the above mentioned parameters concerning historic driving behavior, it is possible to estimate the quantity and duration of the braking events which will be used to realize the changes in power demand leading to the above decelerations. Due to the parameter relating to the historic brake pedal position, the intensity of the brake actuation can be estimated.

Thus, a distribution of brake energy over the current drive cycle can be estimated. An exemplary distribution is shown in Figure 4, which shows a group of probability density functions for different speed ranges. On the horizontal axis the braking energy is noted.

Based thereon, in a fourth step S4, a starting speed and a starting brake force request is derived from the distribution of brake energy. The starting speed and the starting brake force request are determined such that the energy quantity being necessary for removing the determined amount of rust is fully applied to the brake disk during the current drive cycle. This means, that in a drive cycle of comparatively low speed, potentially a low starting speed is derived. If additionally, the parameters about the historic driving behavior show that the brake pedal has been pressed with rather high caution, also a comparatively low starting brake force request will be determined. In contrast thereto, for a drive cycle in which braking events of high intensity at high speed are to be expected, the starting speed may be comparatively high. The same applies to the starting brake force request.

Once the starting speed has been derived, a check is performed if it falls within a speed range which must not comprise the starting speed. In this case the starting speed may be corrected such that it falls just outside this speed range.

It is further noted that the at least one parameter describing the historic driving behavior and the parameters characterizing the current drive cycle are periodically updated during the drive cycle.

The data processing device 10 is also configured for carrying out the method for cleaning a brake disk (cf. Figure 2).

This method determines the starting speed and the starting brake force by using the method for determining a starting condition for cleaning a brake disk comprising steps S1 to S4 as has been explained above.

The brake force allocation unit 12 starts a brake disk cleaning procedure once these starting conditions are met during a drive cycle. This constitutes a fifth step S5 if the initial numbering is continued.

The cleaning procedure is terminated once the rust is removed entirely or if the estimated amount of rust falls below a termination threshold.

Other variations to the disclosed examples can be understood and effected by those skilled in the art in practicing the claimed invention, from the study of the drawings, the invention, and the appended claims. In the claims the word "comprising" does not exclude other elements or steps and the indefinite article "a" or "an" does not exclude a plurality. A single processor or other unit may fulfill the functions of several items or steps recited in the claims. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: data processing device
- 12: brake force allocation unit
- 14: foundation brake controller
- 16: electric traction motor controller
- 18: brake force request
- 20: vehicle speed
- 22: operational conditions
- 24: rust prediction unit
- 26: system time parameter
- 28: environmental condition parameter
- 30: brake disk cleaning control unit
- 32: drive cycle prediction unit
- 34: driving behavior history unit
- 36: navigation unit
- 38: front radar unit
- 40: record of historic vehicle speed
- 42: record of historic brake force requests
- 44: historic road information
- S1: first step
- S2: second step
- S3: third step
- S4: fourth step
- S5: fifth step

## Claims

1. Method for determining a starting condition for cleaning a brake disk, comprising
a. determining that an amount of rust on the brake disk exceeds a predefined threshold (S 1),
b. determining an energy quantity being necessary for removing the amount of rust from the brake disk by pressing at least one corresponding brake pad against the brake disk (S2),
c. estimating a distribution of brake energy over a current drive cycle by using at least one parameter describing historic driving behavior and at least one parameter characterizing the current drive cycle (S3), wherein the current drive cycle is the portion of the drive cycle which lies ahead, and
d. deriving a starting speed and a starting brake force request from the distribution of brake energy, the starting speed and the starting brake force being determined such that the energy quantity being necessary for removing the determined amount of rust is fully applied to the brake disk during the current drive cycle (S4).

2. The method according to claim 1, **characterized in that** the amount of rust on the brake disk is determined by a rust formation model.

3. The method according to claim 1 or 2, **characterized in that** the energy quantity being necessary for removing the amount of rust is determined by a rust removal model.

4. The method according to any one of the preceding claims, **characterized by** a speed range which must not comprise the starting speed.

5. The method according to any one of the preceding claims, **characterized in that** the historic driving behavior is described by a parameter relating to the occurrence of braking events per distance unit in function of a vehicle speed.

6. The method according to any one of the preceding claims, **characterized in that** the historic driving behavior is described by a parameter relating to the duration of historic braking events.

7. The method according to any one of the preceding claims, **characterized in that** the historic driving behavior is described by a parameter relating to a historic deceleration action.

8. The method according to any one of the preceding claims, **characterized in that** the historic driving behavior is described by a parameter relating to a distance and/or to a speed relative to a front vehicle.

9. The method according to any one of the preceding claims, **characterized in that** the historic driving behavior is described by a parameter relating to a historic speed relative to a corresponding speed limit.

10. The method according to any one of the preceding claims, **characterized in that** the historic driving behavior is described by a parameter relating to a historic power demand relative to a road slope.

11. The method according to any one of the preceding claims, **characterized in that** the current drive cycle is described by a parameter relating to at least one of a distance covered by the drive cycle, a slope distribution and a speed limit distribution.

12. The method according to any one of the preceding claims, **characterized in that** the current drive cycle is described by a parameter relating to a real time traffic situation.

13. The method according to any one of the preceding claims, **characterized in that** the at least one parameter describing historic driving behavior and/ or the at least one parameter characterizing the current drive cycle is updated during the drive cycle.

14. A method for cleaning a brake disk, comprising
a. determining a starting condition for cleaning the brake disk by the method according to any one of the preceding claims, and
b. starting a brake disk cleaning procedure once the starting condition is detected during a drive cycle (S5).

15. A data processing device (10) comprising means for carrying out the method of claims 1 to 13 and/or comprising means for carrying out the method of claim 14.

## Patentansprüche

1. Verfahren zum Bestimmen einer Startbedingung zum Reinigen einer Bremsscheibe, umfassend:
a. Bestimmen, dass eine Rostmenge auf der Bremsscheibe eine vordefinierte Schwelle übersteigt (S1),
b. Bestimmen einer Energiemenge, die zum Entfernen der Rostmenge von der Bremsscheibe erforderlich ist, durch Pressen mindestens eines entsprechenden Bremsbelages gegen die Bremsscheibe (S2),
c. Schätzen einer Verteilung von Bremsenergie über einen momentanen Fahrzyklus unter Verwendung mindestens eines Parameters, der ein historisches Fahrverhalten beschreibt, und mindestens eines Parameters, der den momentanen Fahrzyklus charakterisiert (S3), wobei der momentane Fahrzyklus der Abschnitt des Fahrzyklus ist, der noch vor dem Fahrzeug liegt, und
d. Ableiten einer Startgeschwindigkeit und einer Startbremskraftanforderung aus der Verteilung von Bremsenergie, wobei die Startgeschwindigkeit und die Startbremskraft so bestimmt werden, dass die Energiemenge, die zum Entfernen der bestimmten Rostmenge erforderlich ist, während des momentanen Fahrzyklus vollständig an die Bremsscheibe angelegt wird (S4).

2. Verfahren nach Anspruch 1, **dadurch gekennzeichnet, dass** die Rostmenge auf der Bremsscheibe durch ein Rostentstehungsmodell bestimmt wird.

3. Verfahren nach Anspruch 1 oder 2, **dadurch gekennzeichnet, dass** die Energiemenge, die zum Entfernen der Rostmenge erforderlich ist, durch ein Rostbeseitigungsmodell bestimmt wird.

4. Verfahren nach einem der vorangehenden Ansprüche, **gekennzeichnet durch** einen Geschwindigkeitsbereich, der nicht die Startgeschwindigkeit umfassen darf.

5. Verfahren nach einem der vorangehenden Ansprüche, **dadurch gekennzeichnet, dass** das historische Fahrverhalten durch einen Parameter beschrieben wird, der sich auf das Auftreten von Bremsereignissen pro Wegstreckeneinheit als eine Funktion einer Fahrzeuggeschwindigkeit bezieht.

6. Verfahren nach einem der vorangehenden Ansprüche, **dadurch gekennzeichnet, dass** das historische Fahrverhalten durch einen Parameter beschrieben wird, der sich auf die Dauer historischer Bremsereignisse bezieht.

7. Verfahren nach einem der vorangehenden Ansprüche, **dadurch gekennzeichnet, dass** das historische Fahrverhalten durch einen Parameter beschrieben wird, der sich auf eine historische Verlangsamungsaktion bezieht.

8. Verfahren nach einem der vorangehenden Ansprüche, **dadurch gekennzeichnet, dass** das historische Fahrverhalten durch einen Parameter beschrieben wird, der sich auf eine Entfernung und/oder eine Geschwindigkeit relativ zu einem vorderen Fahrzeug bezieht.

9. Verfahren nach einem der vorangehenden Ansprüche, **dadurch gekennzeichnet, dass** das historische Fahrverhalten durch einen Parameter beschrieben wird, der sich auf eine historische Geschwindigkeit relativ zu einer entsprechenden Geschwindigkeitsbegrenzung bezieht.

10. Verfahren nach einem der vorangehenden Ansprüche, **dadurch gekennzeichnet, dass** das historische Fahrverhalten durch einen Parameter beschrieben wird, der sich auf einen historischen Leistungsbedarf relativ zu einer Straßensteigung bezieht.

11. Verfahren nach einem der vorangehenden Ansprüche, **dadurch gekennzeichnet, dass** der momentane Fahrzyklus durch einen Parameter beschrieben wird, der sich auf mindestens eines von einer durch den Fahrzyklus zurückgelegte Wegstrecke, eine Steigungsverteilung und eine Geschwindigkeitsbegrenzungsverteilung bezieht.

12. Verfahren nach einem der vorangehenden Ansprüche, **dadurch gekennzeichnet, dass** der momentane Fahrzyklus durch einen Parameter beschrieben wird, der sich auf eine Echtzeit-Verkehrssituation bezieht.

13. Verfahren nach einem der vorangehenden Ansprüche, **dadurch gekennzeichnet, dass** der mindestens eine Parameter, der das historische Fahrverhalten beschreibt, und/oder der mindestens eine Parameter, der den momentanen Fahrzyklus charakterisiert, während des Fahrzyklus aktualisiert wird.

14. Verfahren zum Reinigen einer Bremsscheibe, umfassend:
a. Bestimmen einer Startbedingung zum Reinigen der Bremsscheibe durch das Verfahren nach einem der vorangehenden Ansprüche und
b. Starten einer Bremsscheibenreinigungsprozedur, sobald die Startbedingung während eines Fahrzyklus detektiert wird (S5).

15. Datenverarbeitungsvorrichtung (10), umfassend ein Mittel zum Ausführen des Verfahrens nach einem der Ansprüche 1 bis 13 und/oder ein Mittel zum Ausführen des Verfahrens nach Anspruch 14.

## Revendications

1. Procédé pour déterminer une condition de démarrage pour un nettoyage d'un disque de frein, comprenant de :
a. déterminer qu'une quantité de rouille sur le disque de frein dépasse un seuil prédéfini (S1),
b. déterminer une quantité d'énergie étant nécessaire pour retirer la quantité de rouille du disque de frein en pressant au moins une plaquette de frein correspondant contre le disque de frein (S2),
c. estimer une répartition d'énergie de freinage sur un cycle de conduite actuel en utilisant au moins un paramètre décrivant un comportement de conduite historique et au moins un paramètre caractérisant le cycle de conduite actuel (S3), dans lequel le cycle de conduite actuel est la portion du cycle de conduite qui est à venir, et
d. obtenir une vitesse de démarrage et une requête de force de freinage de démarrage à partir de la répartition d'énergie de freinage, la vitesse de démarrage et la force de freinage de démarrage étant déterminées de telle sorte que la quantité d'énergie étant nécessaire pour retirer la quantité de rouille déterminée est entièrement appliquée au disque de frein pendant le cycle de conduite actuel (S4).

2. Procédé selon la revendication 1, **caractérisé en ce que** la quantité de rouille sur le disque de frein est déterminée par un modèle de formation de rouille.

3. Procédé selon la revendication 1 ou 2, **caractérisé en ce que** la quantité d'énergie étant nécessaire pour retirer la quantité de rouille est déterminée par un modèle de retrait de rouille.

4. Procédé selon l'une quelconque des revendications précédentes, **caractérisé par** une plage de vitesses qui ne doit pas comprendre la vitesse de démarrage.

5. Procédé selon l'une quelconque des revendications précédentes, **caractérisé en ce que** le comportement de conduite historique est décrit par un paramètre se rapportant à l'occurrence d'événements de freinage par unité de distance en fonction d'une vitesse de véhicule.

6. Procédé selon l'une quelconque des revendications précédentes, **caractérisé en ce que** le comportement de conduite historique est décrit par un paramètre se rapportant à la durée d'événements de freinage historiques.

7. Procédé selon l'une quelconque des revendications précédentes, **caractérisé en ce que** le comportement de conduite historique est décrit par un paramètre se rapportant à une action de décélération historique.

8. Procédé selon l'une quelconque des revendications précédentes, **caractérisé en ce que** le comportement de conduite historique est décrit par un paramètre se rapportant à une distance et/ou à une vitesse par rapport à un véhicule de devant.

9. Procédé selon l'une quelconque des revendications précédentes, **caractérisé en ce que** le comportement de conduite historique est décrit par un paramètre se rapportant à une vitesse historique par rapport à une limite de vitesse correspondante.

10. Procédé selon l'une quelconque des revendications précédentes, **caractérisé en ce que** le comportement de conduite historique est décrit par un paramètre se rapportant à une demande de puissance historique par rapport à une pente de route.

11. Procédé selon l'une quelconque des revendications précédentes, **caractérisé en ce que** le cycle de conduite actuel est décrit par un paramètre se rapportant à au moins un élément parmi une distance couverte par le cycle de conduite, une distribution de pente et une distribution de limite de vitesse.

12. Procédé selon l'une quelconque des revendications précédentes, **caractérisé en ce que** le cycle de conduite actuel est décrit par un paramètre se rapportant à une situation de trafic en temps réel.

13. Procédé selon l'une quelconque des revendications précédentes, **caractérisé en ce que** le au moins un paramètre décrivant un comportement de conduite historique et/ou le au moins un paramètre caractérisant le cycle de conduite actuel est mis à jour pendant le cycle de conduite.

14. Procédé pour nettoyer un disque de frein, comprenant de :
a. déterminer une condition de démarrage pour nettoyer le disque de frein par le procédé selon l'une quelconque des revendications précédentes, et
b. démarrer une procédure nettoyage de disque de frein une fois que la condition de démarrage est détectée pendant un cycle de conduite (S5).

15. Dispositif de traitement de données (10) comprenant des moyens pour mettre en œuvre le procédé des revendications 1 à 13 et/ou comprenant des moyens pour mettre en œuvre le procédé de la revendication 14.
